# EUROPEAN PATENT APPLICATION

(11) **EP 4 826 261 A1**
(43) Date of publication of application: **21.10.2026**
(21) Application number: 25170888.9
(22) Date of filing: 16.04.2025
(51) Int. Cl.: F16B 2/22, F16B 5/06, F16B 21/08, F16B 5/02

(54) **CLIP**

(71) Applicant: Volvo Car Corporation, 405 31 Göteborg (SE)
(72) Inventor: Bengtsson, Anders, 405 31 Göteborg (SE)
(74) Representative: Nederlandsch Octrooibureau

(57) **Abstract**

A clip comprises a head; an elongate body extending from the head; and a plurality of legs extending at an angle from the elongate body toward the head, wherein each leg comprises a plurality of ribs on an outer side, wherein the plurality of ribs form a thread along the plurality of legs.

## Description

### Technical Field

The present disclosure relates generally to clips for attaching two or more components.

### Background

In a vehicle, parts such as panels or covers need to be fixed together, for example in the underbody of the vehicle. Such parts can be secured with clips or clamps, for example, a push-in fastener (sometimes called a Christmas tree clip), which pushes through two holes and has barbed teeth or fins around the elongated portion (extending from a head) which helps to ensure the clip does not back off once pushed in. Unfastening the parts from being held together (e.g., for inspection and/or maintenance) typically involved cutting the clip off, and then using a new clip when the parts needed to be fixed together again.

For efficiency of manufacturing, the clips are sometimes connected to one part (e.g., a panel) at one location and shipped to another location for connecting to the vehicle. Some prior art clips fell off during shipping, leading to a damaged and/or lost clip which needed to be replaced before mounting. This lead to a less efficient mounting process.

### Summary of Invention

According to a first aspect, a clip comprises a head; an elongate body extending from the head; and a plurality of legs extending at an angle from the elongate body toward the head, wherein each leg comprises a plurality of ribs on an outer side, wherein the plurality of ribs form a thread along the plurality of legs.

Such a clip provides a simple but effective device for attaching two or more parts in a way that the clip can also be removed without damaging the clip or surrounding parts. The plurality of legs provide a simple but effective way to ensure that the clip stays mounted to a first part, even during shipment, transport, handling or storage. The ribs forming a thread allows for easy removal of the clip by rotating opposite the threaded direction, allowing the clip to back off the one or more parts. Such a clip is especially useful when access to the parts is limited as the clip elongate body is easily pushed through a hole for mounting, and unscrewed from the head so the clip is easily mounted or removed from only one side.

According to an embodiment, the plurality of legs extend at an angle of 10 degrees to 60 degrees outward from the elongate body. Optionally, the angle is 20 degrees to 45 degrees. Such an angle can provide sufficient width at distal ends of legs to ensure the clip does not back out of a hole, but also allows for clip to remain compact even when legs are not flexed inward. The angle also helps to ensure that the mounting of clip is simple and does not require too much force to flex legs inward and mount the clip to a part.

According to an embodiment, the plurality of legs is two to four legs. Two to four legs can help to ensure that the clip remains mounted on a first part and does not unintentionally come off even if jostled around during transport.

According to an embodiment, each leg is flexible and able to move or flex with respect to the elongate body. Such flexing can be through the materials used, the configuration or both. For example, materials with some flexibility could be used (e.g., plastics) and/or the legs could have a notch or less material where they connect to the elongate body to allow for easy flexing. While the legs are able to flex or deform under pressure, they also automatically return to their starting or manufacturing position once pressure is removed. This pressure can be applied manually, or can be applied by the hole through which clip is pushed for mounting.

According to an embodiment, the elongate body has a distal end, and each of the plurality of legs extend from at or near the distal end at an angle. At or near could be directly at the distal end, or spaced from the distal end, for example 5-50% of the elongate body length from the distal end. The angle can be directly at an angle from the distal end (or near the distal end), or the legs could extend a distance (e.g., substantially parallel with the elongate body) before extending from the elongate body at an angle. In some embodiments, the distal end(s) of the elongate body and/or legs could be angled. Such various configurations with angled ends and/or angling outward of the legs at a distance from the distal end can help with alignment for the push-through connection to one or more parts.

According to an embodiment, the head comprises a first side and a second side, wherein the elongate body extends from the second side of the head. Optionally, the first side of the head comprises a slot. Further optionally, the second side of the head comprises a step around the elongate body and a flange surrounding the step. Such a head can help to secure the clip to another part, with the head (e.g., the flange) contacting a surface around the hole through which the clip elongate body is inserted with the head ensuring that the clip doesn't move fully through the hole. The step can help to secure and center the clip within the hole. As the hole needs to be larger than the elongate body to ensure that the elongate body and legs can fit through when mounting the clip, having a step extending from the head helps to properly position the clip with respect to the hole when securing two parts.

According to an embodiment, the clip is made of plastic, preferably wherein the clip is formed of one or more of the following: Polyoxymethylene (POM) and polyamide (PA). Such materials can provide a strong and secure clip for securing two or more parts while still allowing for flexing of the legs under force and movement back into their original positions when the force is removed.

According to an embodiment, the plurality of legs extend toward the head and an end of each leg is positioned such that a gap is formed between the ends of each of the plurality of legs and the head. Optionally, the gap is approximately the width of a first part to which the clip will connect. By leaving a gap between the ends of the legs and the head, the legs are able to extend fully through a hole in the part (through which the clip connects), allowing the legs to return to their original positions angled outwardly. Having such a gap ensures that the legs are able to return to their wide resting position once inserted through a first part, ensuring that the clip stays mounted on the first part and does not back out during any transport and/or storage before mounting to a further component or part.

According to an embodiment, the plurality of ribs extend outward from each leg at a rib angle. Optionally, the rib angle is about 20 degrees to 50 degrees. Such ribs, extending outward from the legs at an angle form the threads for disconnecting the clip from components (through unscrewing), but also provide a staying or gripping force when the clip is pulled in the opposite direction (e.g., pulled in the direction of the head due to forces on the parts the clip is securing together). Angling the ribs also helps the mounting of the clip, allowing for some flattening when the clip is mounted on one or more parts.

According to an embodiment, the clip is integrally formed. Optionally, the clip is moulded, injection moulded, 3D printed or formed as a single piece in another manner. Forming the clip integrally, e.g., through injection moulding, provides a strong and reusable clip for joining together two or more parts.

According to a further aspect, an assembly comprises a first part with a first side, a second side opposite the first side, and a through-hole extending from the first side to the second side; and a clip as previously described. The clip extends through the through-hole such that the head is on the first side and the plurality of legs are on the second side of the part. Such an assembly allows for shipping the part with one or more clips already mounted, thereby providing for a more efficient mounting process on site, when the assembly is connected to one or more further parts. The clips can be simply pushed through holes in the one or more further parts to secure the first part to the one or more further parts. This can be especially useful when mounting the first part in a difficult to access area, allowing for connecting the first part with a simple push force on the head of the clip once aligned. The legs of the clip ensures that the clip will stay mounted during transport.

According to a further aspect, the clip as previously described is used to connect a first part with one or more additional parts. This is done by pushing the elongate body (with legs flexed inwards) through a hole in the first part until the head contacts the first part and the legs extend outward. The elongate body is then pushed through a hole in the second part until the second part contacts the first part, with the elongate body extending through both parts. The ribs on the legs help to ensure that the clip doesn't come back through the holes. The clip can then be removed by rotating the clip (e.g., using a screw driver or other tool in the slot on the head) as the ribs form a thread around the outside of the legs.

According to a further aspect, a method of forming a clip comprises forming a clip comprising a head, an elongate body extending from the head, and a plurality of legs extending at an angle outward from at or near a distal end of the elongate body toward the head. The plurality of legs each have a plurality of ribs which together form a thread around the plurality of legs. Optionally, the method involves moulding or injection moulding the clip. Such a method provides a simple and efficient way of forming a clip which can secure two or more parts together, stay securely mounted on a single part (e.g., for transport), and be removeable without damaging the clip or surrounding parts.

The person skilled in the art will understand that the features described above may be combined in any way deemed useful. Moreover, modifications and variations described in respect of the system may likewise be applied to a method.

### Brief Description of Drawings

Figure 1A illustrates a perspective side view of a clip;
Figure 1B shows perspective view of the clip of Fig. 1A from a first end;
Figure 1C shows a view of the clip of Fig. 1A from a second end;
Figure 1D shows a side view of the clip of Fig. 1A with threads drawn in;
Fig. 2A shows a perspective side view of the clip connected to a first part;
Fig. 2B shows a cross-sectional view of Fig. 2A.
Fig. 3 shows a side view of a clip connecting a first part to a second part.

### Description of Embodiments

Embodiments of the present disclosure will be described herein below with reference to the accompanying drawings. However, the embodiments of the present disclosure are not limited to the specific embodiments and should be construed as including all modifications, changes, equivalent devices and methods, and/or alternative embodiments of the present disclosure.

The terms such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope the present invention, and similarly, a second element may be referred to as a first element.

The terms used in describing the various embodiments of the present disclosure are for the purpose of describing particular embodiments and are not intended to limit the present disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

The term "vehicle" as used herein refers to a thing used for transporting people or goods. Automobiles, cars, trucks, or buses etc. are examples of vehicles. The vehicle could be an "electric vehicle (EV)", powered by an electric motor that draws current from an on-vehicle energy storage device, such as a battery, which is rechargeable from an off-vehicle source, such as residential or public electric service or an on-vehicle fuel powered generator. The vehicle may be two or more wheeled vehicles manufactured for use primarily on public streets, roads.

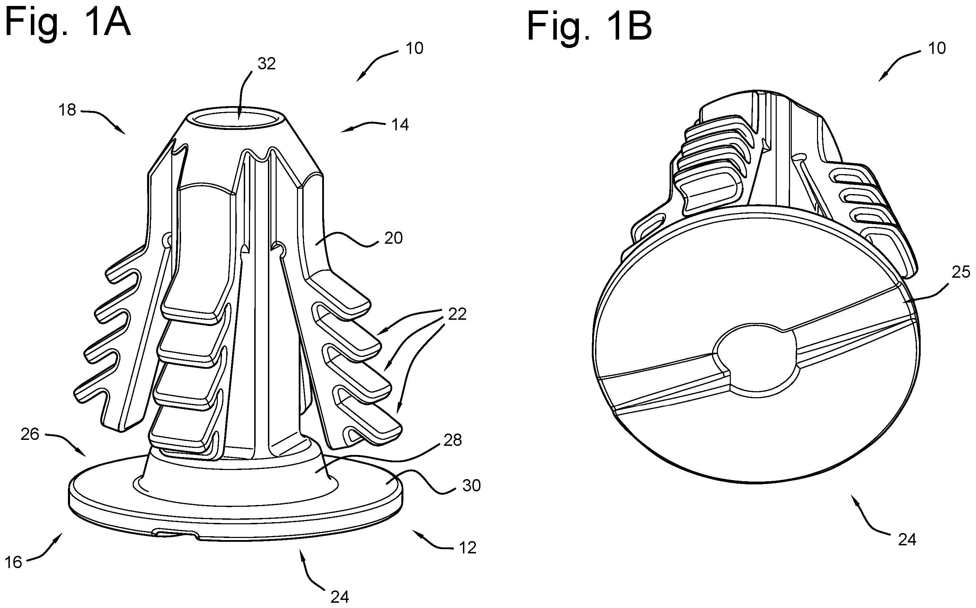

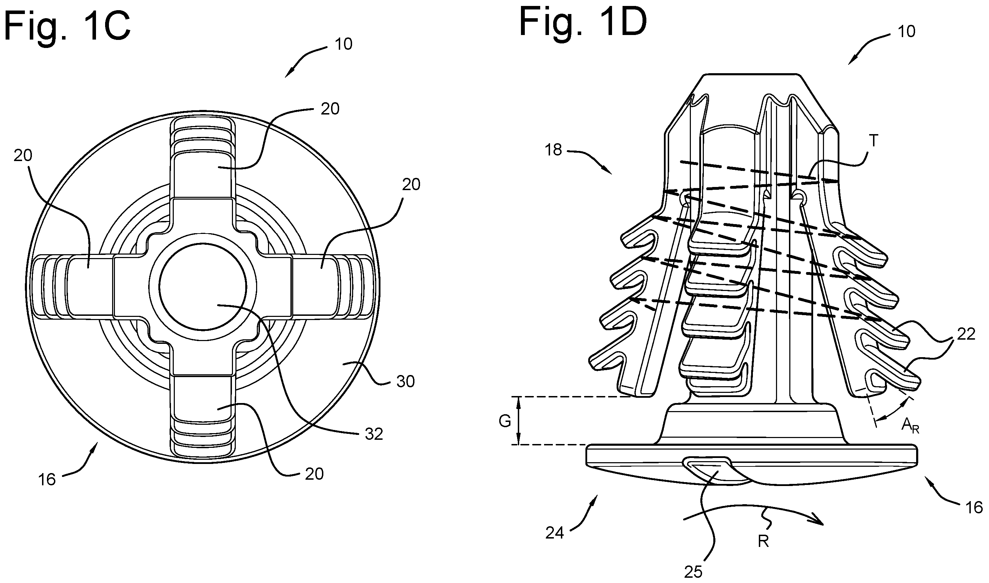

Figure 1A illustrates a perspective view of clip 10; Figure 1B shows perspective view of the clip 10 from a first end 12; Figure 1C shows a view of clip 10 from a second end 14; and Figure 1D shows a side view of clip 10 with threads T drawn in for viewing purposes only.

Clip 10 comprises head 16, elongate body 18, legs 20 with ribs 22 and through-hole 32. Elongate body 18 connects to head 16 on a second side 26 and extends substantially perpendicularly form head 16, typically at a center position. Elongate body 18 can have varied cross-sections, for example, circular, triangular, or rectangular (as shown here).

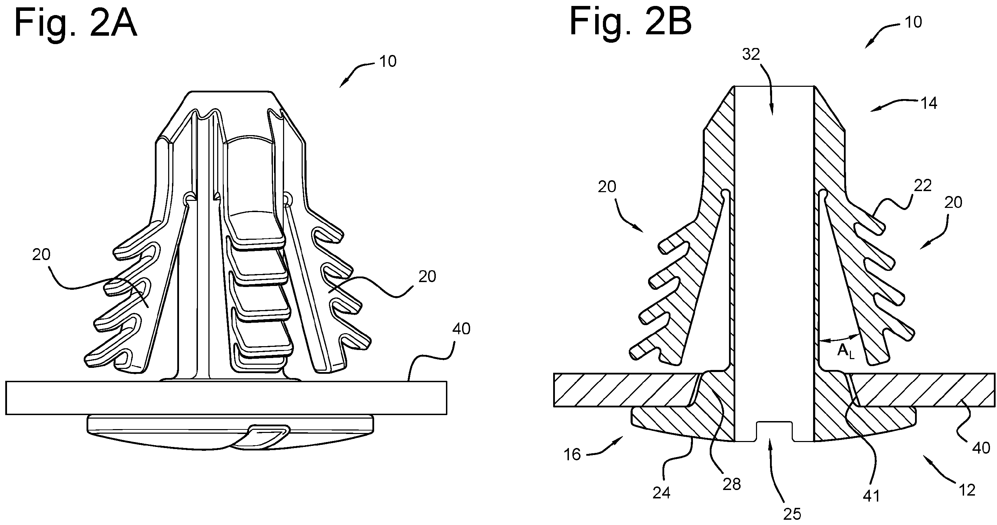

Elongate body 18 has legs 20 extending from at or near second end 14, with legs 20 extending outward from elongate body 18 at an angle A_{L} (see Fig. 2B) towards head 16. The legs (20) can start with a first part near the second end 14 that extends parallel to the elongate body 18, possibly with a slant at the end (as shown in the embodiment of Figs. 1A-3). Such a slant and/or parallel-extending portion can help with guiding the mounting through a hole (as further discussed in relation to Figs. 2A-3). Legs 20 extend to an end position where a gap G is formed between the end of each leg and the head 16, particularly the flange 30. Such a gap is approximately the width or thickness of a part to which the clip 10 will connect. The angle A_{L} at which legs 20 extend can be 10 degrees to 60 degrees outward from the elongate body, for example, 20 degrees to 45 degrees. Legs 20 are able to deform or flex inward toward elongate body 18 upon application of force, but will return to their original position (as shown in Figs. 1A-1D) upon removal of the force. Such flexing can be through the configuration of legs (disposed at an angle), the materials and/or one or more mechanical flex features such as a notch at the connection to the elongate body 18. Legs 20 are typically spaced evenly around elongate body 18. While four legs 20 are shown, other embodiments could have more or fewer legs, for example two to five legs.

Each leg 20 comprises ribs 22, which extend outward from the leg 20, in the direction of head 16 and at an angle. The angle of ribs A_{R} could be about 20 degrees to 50 degrees with respect to leg 20. Ribs 22 are configured to jointly form a thread T around clip 10, as shown in Fig. 1D.

Head 16 includes slot 25 on first side 24; and step 28 and flange 30 on second side 26. Slot 25 is typically a shallow slot extending in a straight line through part or all of first side 24, and configured to receive a screw driver or other device for rotating clip 10. Step 28 is sized to be slightly smaller than the hole 41 which clip 10 will fit through (see Fig. 2B), and substantially conforms to a thickness of the part to which clip 10 will connect. Flange 30 is typically planar and sized to be larger than the hole 41 through which clip 10 will connect.

Clip 10 can be formed of plastic or composite materials, for example, Polyoxymethylene (POM) and/or polyamide (PA). Clip is typically integrally formed, for example through moulding or injection moulding or any other suitable process.

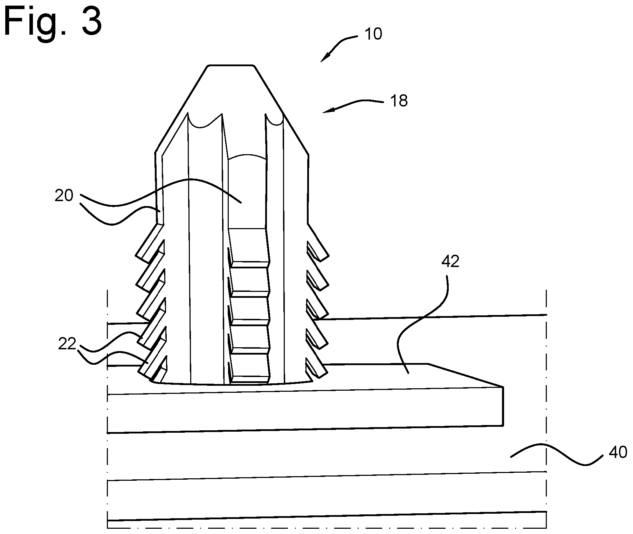

Fig. 2A shows a perspective side view of the clip 10 connected to a first part 40; and Fig. 2B shows a cross-sectional view of Fig. 2A. Clip 10 is used to connect a first part 40 to one or more additional parts (see Fig. 3).

To connect to first part 40, clip 10 elongate body 18 with legs 20 is pushed through a hole 41 in first part 40 until flange 30 contacts a side of first part 40. The hole 41 has a diameter slightly larger than step 28, and step 28 and first part 40 are substantially similar in height, as can be seen in Fig. 2B. When pushing elongate body 18 through hole 41, legs 20 are flexed inward to allow elongate body 18 and legs 20 to fit through hole 41. The inward force can be provided by the hole 41 as clip 10 is pushed through hole 41. Once fully through hole 41, legs 20 revert back to their original positions, as shown in Figs. 2A-2B. This means that legs 20 then extend to a diameter larger than hole 41(at least at the ends of legs 20), thereby ensuring that clip 10 cannot come back through hole 41.

By forming clip 10 with flexible legs 20 that extend toward head but leave a gap between ends of legs 20 and head 16, clip 10 can be securely mounted to a first part 40 before transporting to another location for assembly. The configuration with angled legs 20 allows for easily mounting clip 10 to the first part 40 (e.g., upon manufacture) and then transporting to another location without the clip 10 falling off due to the securing on one side by head 16 (flange 30) and on the other side by legs 20, each of which extend outside the diameter of hole 41 and therefore cannot be pushed back through. Step 28 helps to ensure clip 10 stays centered in hole 41, and gap G ensures that legs can flex back outward once clip 10 is mounted to first part 40. Prior art clips did not have legs 20, and sometimes fell off during the transporting, therefore requiring new clips before the part 40 could be properly assembled or connected to further parts. The configuration of clip 10 with legs 20 helps to ensure that clip 10 stays securely mounted on part 40 even during handling, shipment or storage, thereby reducing the number of extra clips needed and making for more efficient assembly.

Fig. 3 shows a side view of clip 10 connecting first part 40 to second part 42. As can be seen, when connecting to a second part 42, legs 20 are flexed mostly or fully inward. Elongate body 18 is pushed through the hole in second part 42, but legs 20 do not extend fully through. Ribs 22 then help to ensure that clip 10 securely holds first part 40 to second part 42 and does not unintentionally back out.

Such clips 10 are often used in areas with limited access, and therefore the easy push-through to mount the parts 40, 42 with clip 10 is ideal. However, sometimes one or more of the parts 40, 42 need to be removed, for example, for inspection, servicing and/or maintenance. Clip 10 is removable by rotating clip 10 in direction R, typically using a screw driver or other tool in slot 25. Because ribs 22 form a thread, clip 10 can be easily dismounted through "unscrewing". Past clips typically needed to be cut off for removal, and then new clips were needed when the parts 40, 42 needed to be mounted again.

Clip 10 is a simple but effective device for attaching two or more parts 40, 42 in a way that clip 10 can also be removed without damaging the clip 10 or surrounding parts 40, 42. The plurality of flexible legs 20 provide a simple but effective way to ensure that clip 10 stays mounted to first part 40, even during shipment, transport, handling and/or storage. Ribs 22 forming a thread allows for easy removal of clip 10 by rotating opposite the threaded direction, allowing clip 10 to back off the parts 40, 42. Such a clip 10 is especially useful when access to the parts is limited as the clip elongate body 18 is easily pushed through a hole for mounting, and unscrewed from the head 16 so the clip 10 is easily mounted or removed from only one side. Thus, the configuration of clip 10 provides cost savings (e.g., fewer replacement parts), efficiency in mounting and dismounting, and is environmentally friendly.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims .

## Claims

1. A clip (10) comprising:
a head (16);
an elongate body (18) extending from the head (16); and
a plurality of legs (20) extending at an angle from the elongate body (18) toward the head (16), wherein each leg (20) comprises a plurality of ribs (22) on an outer side, wherein the plurality of ribs (22) form a thread along the plurality of legs.

2. The clip (10) of claim 1, wherein the plurality of legs (20) extend at an angle of 10 degrees to 60 degrees outward from the elongate body, preferably wherein the angle is 20 degrees to 45 degrees.

3. The clip (10) of any of the preceding claims, wherein the plurality of legs (20) is two to four legs.

4. The clip (10) of any of the preceding claims, wherein each leg (20) is flexible and able to move with respect to the elongate body (18).

5. The clip (10) of any of the preceding claims, wherein the elongate body (18) has a distal end, and each of the plurality of legs (20) extend from at or near the distal end at an angle.

6. The clip (10) of any of the preceding claims, wherein the head (16) comprises a first side (24) and a second side (26), wherein the elongate body (18) extends from the second side (26) of the head (16).

7. The clip (10) of claim 6, wherein the first side (24) of the head (16) comprises a slot (25).

8. The clip (10) of any of claims 6-7, wherein the second side (26) of the head (16) comprises a step (28) and a flange (30).

9. The clip (10) of any of the preceding claims, wherein the clip (10) is made of plastic, preferably wherein the clip (10) is formed of one or more of the following: Polyoxymethylene (POM) and polyamide (PA).

10. The clip (10) of any of the preceding claims, wherein the plurality of legs (20) extend toward the head (16) and an end of each leg (20) is positioned such that a gap (G) is formed between the ends of each of the plurality of legs (20) and the head (16), preferably wherein the gap is approximately a thickness of a first part to which the clip will connect.

11. The clip (10) of any of the preceding claims, wherein the plurality of ribs (22) extend outward from each leg (20) at a rib angle (A_{R}), preferably wherein the rib angle (A_{R}) is about 20 degrees to 50 degrees.

12. The clip (10) of any of the preceding claims, wherein the clip (10) is integrally formed, preferably wherein the clip (10) is moulded, more preferably wherein the clip (10) is injection moulded.

13. An assembly comprising:
a first part (40) with a first side, a second side opposite the first side, and a through-hole (41) extending from the first side to the second side;
a clip (10) according to any of the preceding claims, wherein the clip (10) extends through the through-hole such that the head (16) is on the first side and the plurality of legs (20) are on the second side of the part.

14. Use of the clip (10) of any of claims 1-12 to connect a first part (40) with one or more additional parts (42).

15. A method of forming a clip (10), the method comprising:
forming a clip (10) comprising a head (16), an elongate body (18) extending from the head (16), and a plurality of legs (20) extending at an angle outward from a distal end of the elongate body (18) toward the head (16), the plurality of legs (20) each with a plurality of ribs (22) which together form a thread (T) around the plurality of legs (20).
